# EUROPEAN PATENT APPLICATION

(11) **EP 1 696 341 A1**
(43) Date of publication of application: **30.08.2006**
(21) Application number: 05251164.9
(22) Date of filing: 28.02.2005
(51) Int. Cl.: G06F 17/30

(54) **Splitting multimedia data**

(71) Applicant: BRITISH TELECOMMUNICATIONS public limited company, London EC1A 7AJ (GB)
(72) Inventor: Deans, Paul Bryan, Melton, Suffolk IP12 1PZ (GB); Wiseman, Richard Michael, 38 Elmers Lane, Ipswich, Suffolk IP5 2GW (GB)
(74) Representative: Lidbetter, Timothy Guy Edwin

(57) **Abstract**

Data arranged to be displayed as a large screen image (such as for a desktop computer) is converted into two derivative parts: one suitable for display in a small screen format (such as for a mobile telephone display screen), and a supplementary audio stream. The data to be displayed is selected according to the nature of the data in the large image, such as an audio commentary on those parts of the image omitted from the display, or rendering as speech any textual material in the original image, or an abridged version of such text.

## Description

This invention relates to the processing of data, and in particular to the adaptation of data to be suitable for display on the device by which it is received. Most such displays include a visual element, but the term "display", as used in this specification, embraces any means of presenting data, including audio and tactile (e.g Braille). Text and other visual information is typically displayed on a screen, but visual display may also be by means of printing. Combinations of presentational methods are also known, most commonly video with an associated soundtrack or textual material.

There is increasing interest in using services such as the "Internet" to provide access to data using a variety of different types of device. For example, for many users the conventional desktop or "laptop" computer is convenient. Such devices have relatively large screen sizes, easily usable interfaces, fast network connections and good quality audio. However, many smaller devices such as "Personal Digital Assistants" are also capable of connection to the Internet, usually over wireless connections. Their small size is preferred by some users, usually because they are more portable. Bandwidth is becoming less of a constraint for such devices, but the requirement for portability will always impose a constraint on the size of their visual displays and user input systems (a keypad or the like), and may also affect the quality of audio and other features.

Content that can be displayed well on fixed systems does not always translate to these smaller, portable devices. Some existing content providers overcome these different requirements by providing "low graphics versions", for use when their websites are accessed by portable devices. Given the smaller screen size, supplementary audio would be desirable. It is also desirable that this combination accurately reflects the original visual content. However, the low graphics/audio versions are less suitable for fixed systems, and may be unsuitable for use in environments where, for example, it is not acceptable to have an audio output.

Provision of different versions requires additional work by the content provider to provide two or more parallel sites, but it will never be possible to provide a perfect match for all potential users' preferences. It also puts the user to the inconvenience of having to be made aware of the different versions, and then to access the correct one. In particular, a user may wish to access the same data at different times using different devices, or even to change from one device to another during one session. Even staying with a single device, there may be situations where the user may wish the data to be displayed in different ways - for example a user may find audio output is less useful in a noisy environment, (or intrusive in a quiet one), or the user may have a hearing impediment. Conversely audio may be more useful in a poorly lit environment or if the user is partially sighted, as well as for use with a device with a small screen size. For these reasons it is more desirable for applications or programs to be uniformly accessible across fixed and mobile networks, and adaptable to the user's display requirements at the display device itself. ln particular, there is a need for content control and transcoding where a visual web page is being viewed on one device (e.g. fixed) and then later (or at the same time) required on a portable, smaller screen device. Automatic page progression (to keep up with voice content) might be an example of one content supplementing the other. A system that automatically converts large screen HTML to a combination of small screen HTML and supplementary audio would be of great benefit.

According to the invention, there is provided a process for converting a stream of data into two or more streams of complementary data by identifying metadata associated with the data, and selecting elements of the data for inclusion in each stream according to the metadata so identified.

The metadata may be specific "tags" inserted for the purpose, but the invention may also make use of other information, such as font properties (e.g. size, colour), character count, word count, sentence count, line count or combinations of some or all of these to determine the significance of the information conveyed.

One preferred embodiment generates two or more complementary, synchronisable components from a single initial data stream. These components may be a visual component and an audio component, derived from initial visual content. In a particular embodiment, the process selects some or all of the initial textual content for conversion to speech. The audio content may be destined for the same client device or a different one, and/or may be partially network based. Other ways of splitting the content may be used, for example bilingual, or using outputs other than audio and visual, for example haptic (tactile) content such as Braille. The scope of the invention is not limited in terms of the number of separate outputs which may be generated.

The process may determine how to split the original content, according to the type of device in which it is installed and on user preferences input prior to, or at, the time of use.

One or more of the outputs may include summaries of the full content, created using a summarising or abridging process to reduce the amount of textual content.

The process may control page progression on a client device or devices, based on the audio content. Alternatively the audio content may be based on the visual content. The process may use event-based data for its control decision making, using such events as keyboard or voice commands. The process may be initiated by detection of a request from the client device to the content controller, or detection of an event from an external controller, signalling to initiate a move from one device to another (for example, when moving from a fixed device to portable device). Alternatively, it may be initiated by detection of a user request to move from one device to another, where the split would be required.

The principles used in this invention may also be used in reverse, to combine complementary audio and visual content intended for a small-screen device to produce single visual content for a different device. The small screen content may be preformatted to contain markup tags that are used to promote the formatting process. For example sections of visual content which summarise the audio content may be omitted if the entire audio content is to be converted to visual content. Such arrangements may be particularly useful for conversion of audio-visual material for the use of viewers who have impaired hearing.

Our co-pending application, filed on the same date as the present application and having applicant's reference A30703, describes a complementary process to convert two or more separate data streams into a single stream. The two processes may be used in series to convert from one split format (e.g. full text content plus voice summary) to another (e.g. full voice content plus haptic summary)

An embodiment of the invention will now be described, with reference to the drawings, in which:
Figure 1 is a schematic representation of a representative architecture embodying the invention
Figure 2 is a schematic representation of a content splitting process used in an embodiment of the invention
Figure 3 is a schematic representation of a complementary content aggregating process
Figure 4 illustrates a first form in which the data may be presented;
Figure 5 illustrates a second form in which the data may be presented;
Figure 6 illustrates a third form in which the data may be presented;
Figure 7 illustrates a fourth form in which the data may be presented;
Figure 8 illustrates a process by which data may be generated for presentation in the form illustrated in Figure 4,
Figure 9 illustrates a process by which the data shown in Figure 4 may be aggregated;
Figure 10 illustrates a process by which data may be generated for presentation in the form illustrated in Figure 5,
Figure 11 illustrates a process by which the data shown in Figure 5 may be aggregated.
Figure 12 illustrates a process by which data may be generated for presentation in the form illustrated in Figure 6,
Figure 13 illustrates a process by which the data shown in Figure 6 may be aggregated;
Figure 14 illustrates a process by which data may be generated for presentation in the form illustrated in Figure 7,
Figure 15 illustrates a process by which the data shown in Figure 7 may be aggregated.

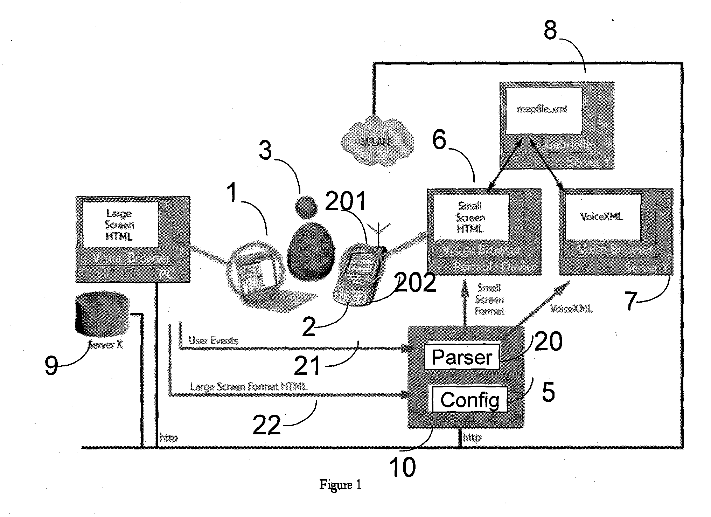

Figure 1 shows two devices; a personal computer (1) with a large screen and a portable device (2) with a small screen. The portable device 2 may generate both an audio output 201 and a video output 202, or separate devices may be used for these purposes - the data separation and synchronizing issues are the same in both cases. More than two outputs may be generated - for example separate audio outputs in different languages for different listeners.

For the sake of illustration, consider a user (3) accessing a remote destination 9 using the internet, initially using the larger device (1) and then, some time later, switching to the smaller device (2). In effect, he is transferring connection from the large device to the small one.

The transition between formats suitable for different devices is performed by a content modifier 10. This may be initiated by a physical request, (for example the pressing of a button on one of the user devices (1, 2), or it may be automatically prompted by the location of the small device 2 (and therefore, it may be assumed, its user). Such an automatic request may be based on signal strengths to the WLAN or other serving wireless network, or on proximity to the large device 1, or the use of a satellite-based Global Positioning System.

On receiving the request, the content modifier 10 retrieves configuration data from a store 5 for determining how the large screen format HTML data stream 22 is to be converted into two derivative forms 201 (Voice XML) and 202 (small screen format HTML). The content modifier 10 then carries out the conversion process and transmits the resulting data streams to the appropriate servers (6, 7) for transmission of the respective audio and visual data streams 201, 202. A mapfile 8, may be created containing information for conversion of content between client types, for use in synchronisation of the contents, as will be discussed later. If the two visual formats 22 (large screen), 202 (small screen) are not synchronised, the portable device 2 can instead be signalled to prompt the user to accept a page update.

To provide the user with audio content the controller would next initiate a telephone call to the portable device (2) (or to some other device such as a mobile phone), to provide the user with an audio complement 201 to the small screen visual component 202.

'Page-up' and 'Page-down' events travelling between the content modifier 10 and the portable device 2 (and/or Voice Browser) could be based on progression through the information. Progression could be monitored from prompts in the content transmitted to one device, or delivered by the user, or by mark-up tags within the audio, or by characteristics of the text or other information displayed on the small screen, such as font size, number of lines, paragraph tags, or character count. The 'Page-up' and 'Page-down' events could be controlled by the user, or they could be sent and received automatically as the audio content progresses, leaving the user to just read and listen to the information.

The form in which the original content is to be presented to the user on the small screen and supplementary audio channel determines how the original large screen content is to be processed. lf the audio content were to report exactly what is on the small screen, and the pages are to progress in line with the audio, there is a simple one-to-one mapping from what is displayed to what is spoken. A system such as that developed by the applicant company and disclosed in International Patent Application WO03/084173 could be used to arrange automatic progression through the visual material in synchronisation with the corresponding audio content. However, the present invention is concerned with modifying the content for one or more of the displays, and the embodiments to be described with reference to the Figures relate to presentation styles in which the visual content and the audio content are complementary and do not provide identical information towards the user. The process may include a mapping of page format (e.g. *"pro forma"* with buttons, list of items, menu of options, plain text) to an audio description of that format.

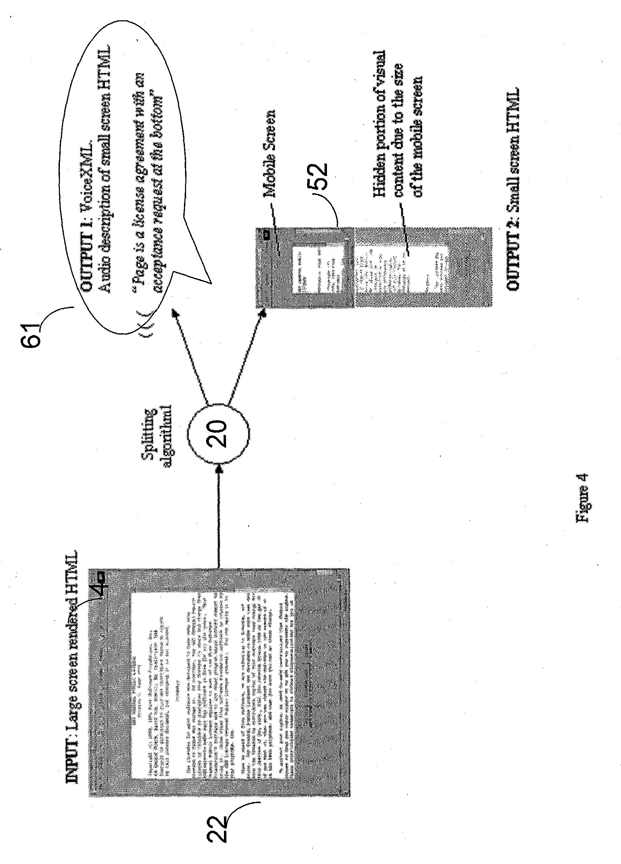

As will be discussed with reference to Figures 4, 5, 6 and 7, the audio content 201 may be used to give a summary description 61, 71 of a large amount of visual content 22, 52. This can give the user some foresight into what is at the bottom of a page so that he need not scroll down. In this way, he can effectively 'see' the whole page on the small screen. Alternatively the small screen visual content 202, either displayed in full 52 or summarised (62, 72) may be supplemented with the full text in audio format 51 which, if played at the right place, removes the need to show all the text at once. For example, the audio content could give the identity of an image file whose size is too great to display visually on the small screen 2. Alternatively, the audio may give a summary of a long text. An audio menu may be provided to describe what input functions are available to the user, and how to access them (which buttons to press) without needing to display the menu. Audio may be used to describe those parts of a large visual page that are not displayed on the small screen. For example, the audio output could provide messages such as *"Page shows a form which requires a submit'* or *"This is page 3 of 4 and requires user to press "next" before progressing"*

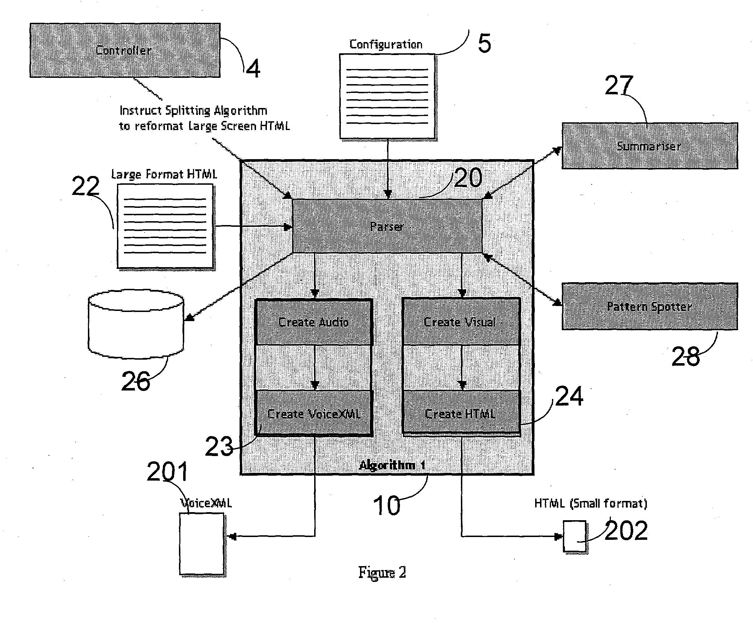

Figure 2 illustrates the overall process controlling the split of data in the content modifier 10. A controller 4, operating in response to specific user instructions 21 or other external events, controls a parser 20. The parser 20 operates under the control of a summarisation processor 27 and a pattern spotter 28. The pattern spotter 28 determines the kind of page represented, identifies key elements of the content, and identifies any frames that represent buttons that a user may "click" on, for example by recognition of text such as "Accept", "Agree", "Order", "Submit", "Menu", "Search", "Next", "Cancel". The summariser 27 runs a program to generate an abridged version of the text, or a brief description of it, (such as *"This is a licence agreement"*). The parser 20 converts the input stream 22 into audio and visual data streams 23, 24 for transmission to the respective outputs 201, 202. The input is also stored 26, to allow the original form to be reconstituted later should it be required for later use, for example, returning from small screen context back to large screen context. A unique identifier is associated with each entry

The way the parser 20 functions depends on the style of presentation specified in the configuration file 5. Various possible styles of presentation will be discussed hereafter, in terms of the visual and audio outputs to be generated and the processes by which they are generated.

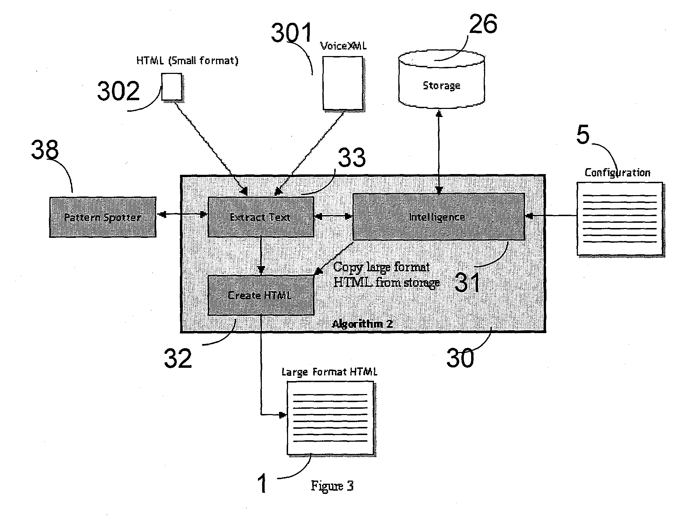

Figure 3 illustrates a converse process, in which data 301, 302 configured for two or more separate devices is aggregated by a processor 30 into a format suitable for a single device 1. The two (or more) input streams 301, 302 are fed to a text extraction processor 33, which operates in conjunction with a pattern spotter 38 analogous to the pattern spotter 28 in Figure 2, to identify text for conversion 32 to a suitable output format. If the original large format data is available, for example having been maintained in a store 26 as described with reference to Figure 2, that can simply be copied from an appropriate point in the data stream identified from the input streams 301, 302. If the original large format does not exist then a more complex parsing must be performed 31 to assemble as much of the content as possible from the inputs 301, 302.

These processes will now be described in more detail, using four illustrative presentation "styles", depicted in Figures 4, 5, 6 and 7.

The first presentation style to be described, illustrated in Figure 4, preserves the visual content 22 (52), and generates an audio description 61 of it. This prevents the user of the small screen device 2 from having to scroll down to the bottom of what could be a large web page 22, to gauge what interaction is required of him. For example, the page could be a licence acceptance form; with many pages of text, with buttons at the bottom for "I accept", and " I don't accept". The audio output 61 would be more concise than the full text 22, 52, such as :
*"Large amounts of text with user interaction required at the end of the page"*
   or
*"Large amounts of text with user required to choose one of the following: Option one ― I accept, Option* 2, / *don't accept."*
   or, if the parser 20 is equipped to recognise the characteristics of this stereotypical page
*"This is a licence acceptance form. Please read, and choose to accept or reject this agreement.* "

The user still has access to the full visual content 52 should he wish to view the terms of the licence. If he is already familiar with these terms, (or is prepared to accept them without reading them in full), he does not have to scroll through the entire agreement to find the acceptance button.

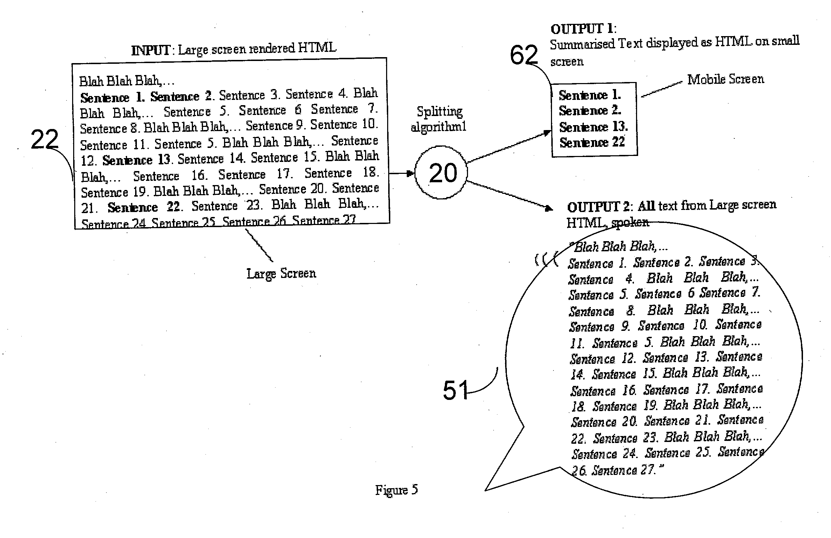

In the second style, illustrated in Figure 5, a full audio transcript 51 is supplied, containing all the content of the original visual display 22, along with a summarised visual display 62. This prevents the smaller screen 202 from being swamped with multiple pages of visual information whilst allowing the user access to all information via the audio channel 201. No loss of data occurs as the user has access to the full audio content 51. As there may be a large amount of information in the audio transcript 51, a form of voice control may be used to navigate it.

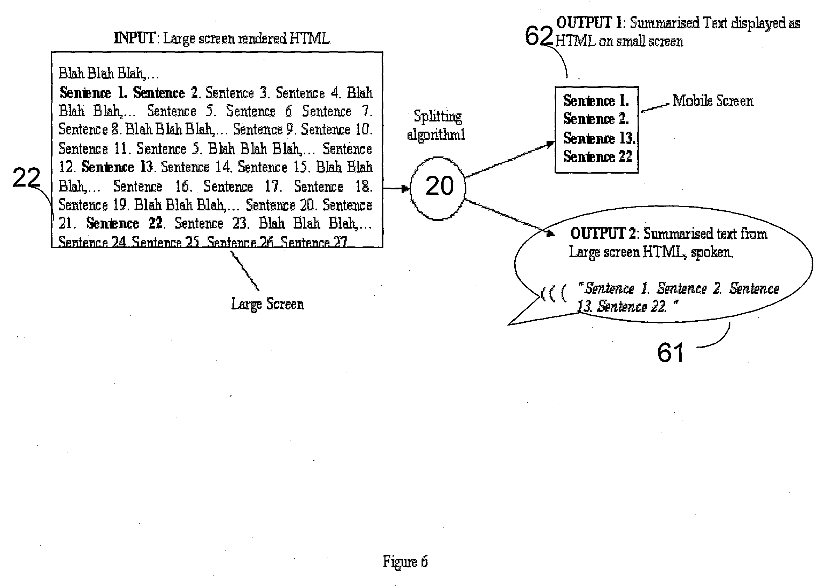

In a further style, illustrated in Figure 6, both the visual and audio outputs 201, 202 give summarised information 61, 62 extracted from the original content. Note that the information extracted for the two outputs may be complementary, or they may have some parts in common or be identical (as depicted).

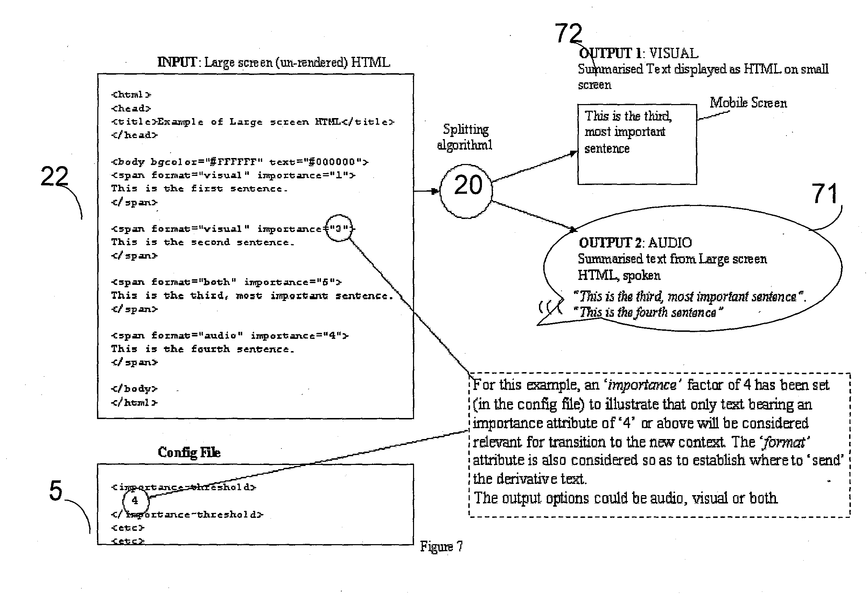

The preceding arrangements rely on ability of the parser 20 to interpret the input 22. If the input 22 is pre-formatted to contain mark-up tags, the parsing process 20 could be operated as shown in Figure 7. The tags define the importance of the text, and therefore offer more accurate summarisation. The use of tagged HTML for input to the process simplifies the split as the tags identify where, how and when the split is to be made. The process can be configured to play or display text (71, 72) of specific levels of importance, and thereby limit the amount of content displayed or heard. For example, passages of the text may be tagged with an importance rating, and the parser 20 recognises these tags and selects for display only those passages having the highest rating, or having ratings above a given threshold value.

The following is an example of the use of mark-up tags to show importance. 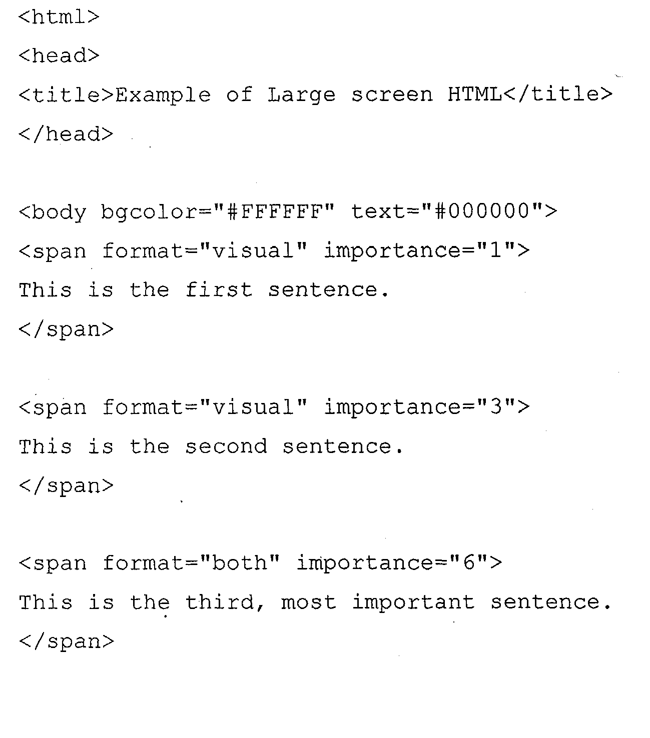 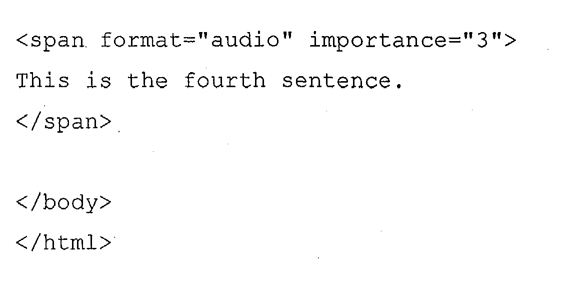 The <span> tag has been used here though equally, attributes could be added to <div>, <h1 >,<h2>,<p>,etc...

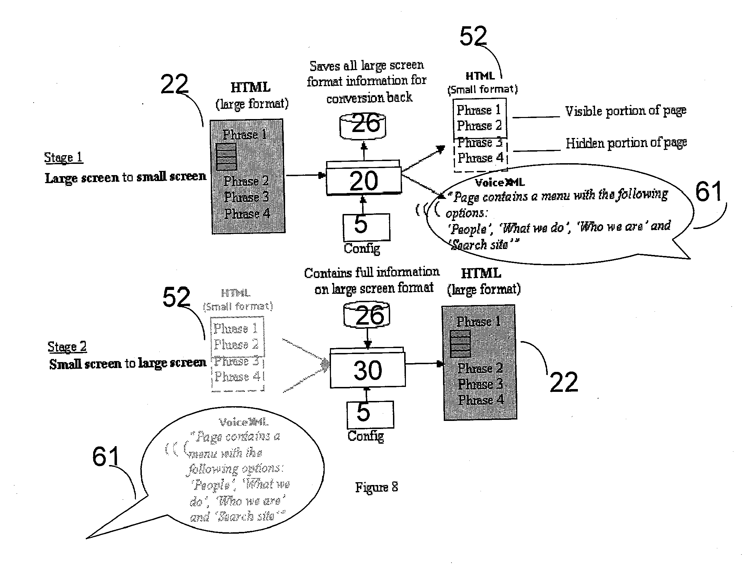

The processes of generating these different styles, and of aggregating them again if required, will now be described in more detail. The variant shown in Figure 4 is generated as shown in the upper part of Figure 8. The parser 20 is configured (according to the configuration controller 5) to generate two outputs. It generates a summarised audio content 61, and also replicates the original (large format) content 22 as a visual output 52, adapted to the small screen format. Only part of the visual format will be visible to the user at any one time, but he may view the hidden portions by scrolling.

To generate the audio content 61 the parser 20, under the control of the pattern sorter 28, first searches for specific formats of web page, such as:
menu frames (with or without accompanying information frame),
lists,
*pro formas* with buttons marked NEXT, PREVIOUS, SUBMIT, SEARCH, ACCEPT, DO NOT ACCEPT etc,
plain text,
tables,
graphics,
or combinations of these.

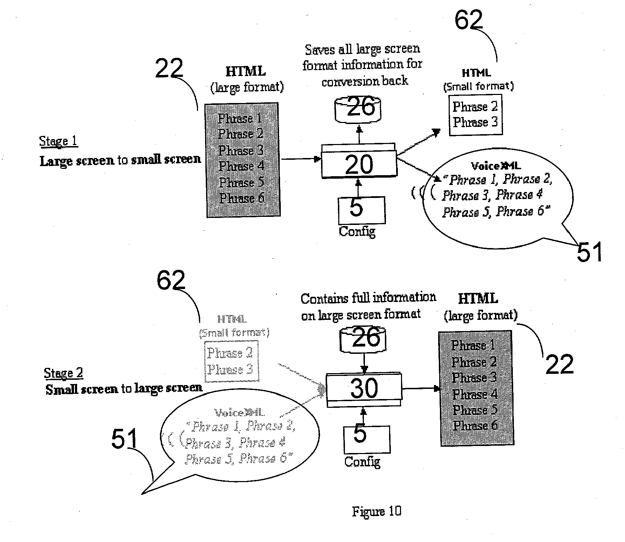

Once the format has been identified, a textual description is created using the summariser process 27. This description is then converted 23 which to an audio prompt 61. A VoiceXML file 201 is then created to play the prompt. The visual format is also parsed. In this embodiment the HTML content 22 is converted from a format suitable for the large device 1 to a format 52 suitable for the small screen 202, with no loss of content. The visual content may be reported directly, or it may be transformed into a more 'palatable' form for the smaller screen as shown in Figure 10. The Parser could search for graphics, menus, large paragraphs of text, or combinations of these. Such elements may be modified (e.g by reducing the font size) or replaced by a textual description or summary, so that a textual representation may be created which can be converted to HTML for display on the small screen device. For graphics, the graphics filename, (minus extension) could be used in place of the graphic. Menus could be reduced in size or, if they are graphical, could be converted to a textual hyperlink.

The incoming stream 22 is also maintained unmodified in a store 26. Should it subsequently be desirable to return to the original large screen device 1, or a similar one, conversion is straightforward as the original version has been saved in the store 26 (lower part of Figure 8).

The lower part of Figure 8 illustrates how the large format may be reconstituted, should the user return to using the large format device 1. In this case the process is straightforward as all the full content is still present in the small format visual stream 52 and in the store 26. Conversion from small screen is just a case of looking up the saved version in storage. Formatting information may be retrieved from the store 26, whilst if it is necessary to synchronise with the small screen version, synchronisation information is available from the stream 52.

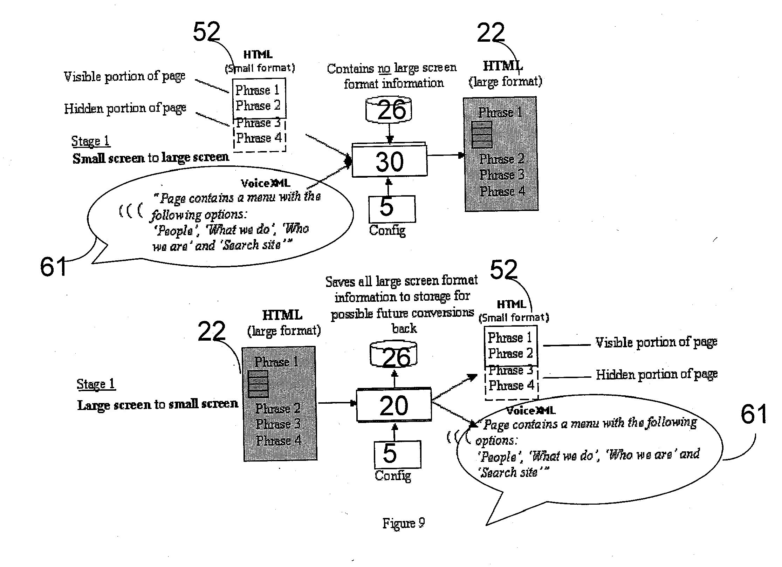

Figure 9 illustrates how the large format may be generated from an initial small format input of the kind shown in Figure 4. In this instance there is no large screen format information in the store 26 so the process 30 illustrated in Figure 3 must generate its own formatting. However, the full original content 52 is available from the visual content input 302. Knowing which presentation style to adopt will help 'create' large screen format. As an example, this style will need some intelligence to convert the text strings "menu" with options *"'People'*, *'What we do', 'Who we are' and 'Search site'* to a menu containing those elements as links. The presentation style is held in the configuration file 5. Returning to the small format is shown in the bottom part of Figure 9, and proceeds as in the top part of Figure 8.

For the second format (Figure 5), the process operates as shown in Figure 10. The parser 20 is instructed to extract all text tagged for viewing, including all headings and all text within paragraphs and tables, and converts the original content 22 to a shortened, summarised version 62, which becomes the visual content 202. It also converts the full text to an audio format 51, as shown in Figure 10, to be the audio content 201. As with the previous arrangement, conversion from small screen is just a case of looking up the saved version in the store 26, where all the original information is stored such that it can be reconstituted (lower part of Figure 10) if a return to a large screen device 1 is required.

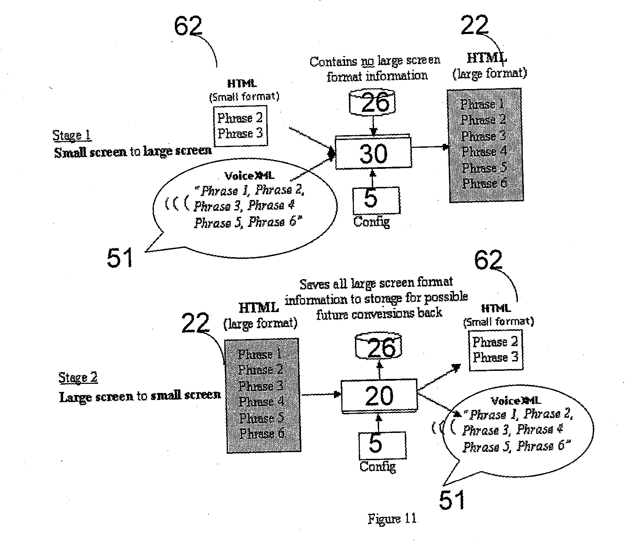

Figure 11 illustrates how the large format 22 may be generated from an initial split presentation in which the audio content 301 has the full text 51. Unlike the situation in Figure 10 (lower part), in this instance there is no large screen format information in the store 26 and only limited visual content 62 in the input 302 so the process 30 illustrated in Figure 3 must use text extraction and intelligence used to create the large format. However, the full textual content 51 is available from the audio input 301. Knowing which presentation style to adopt will help 'create' large screen format. As an example, the second presentation style calls for 'full audio'. So, extracting the text from the audio should provide enough information to create a full large screen format. The presentation style is held in the configuration file 5. Returning to small format is shown in the bottom part of Figure 11, and proceeds as in the top part of Figure 10.

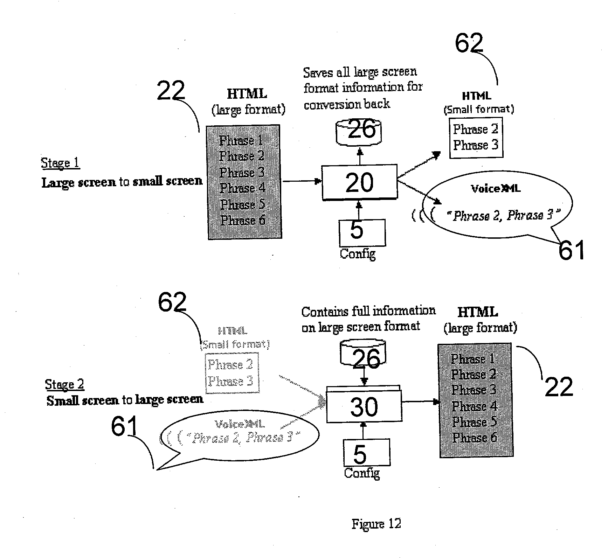

For the third format, illustrated in Figure 6, both audio and visual content, are generated in summarised from (61, 62), respectively as in Figures 4 and 5, although the material extracted may be different in each case. The extraction processor 10 is configured as illustrated in Figure 12, and corresponds closely with the corresponding parts of Figures 8 (audio) and 10 (visual). The parser 20 splits the original (large format) content 22 into summarised audio content 61 and summarised visual content 62. The user may lose access to some of the content (both visual and audio) in favour of a more user-friendly interaction. In this case, conversion back to large screen format (lower part of Figure 12) is just a case of looking up the saved version in the store 26, as neither audio nor visual streams hold the complete content.

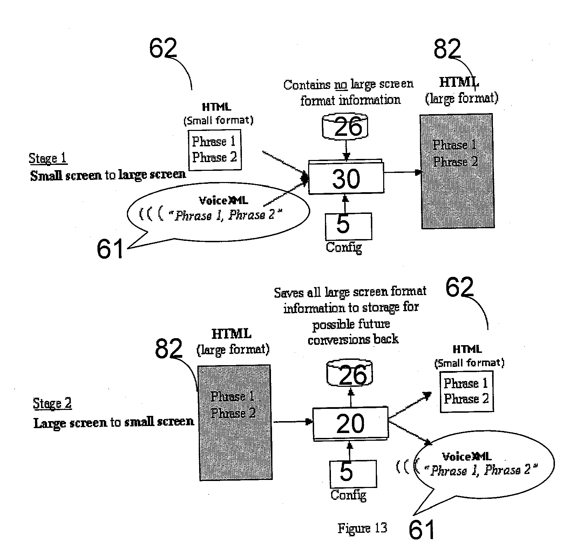

Figure 13, which again corresponds closely with the corresponding parts of Figures 9 (audio) and 11 (visual), illustrates the aggregation of the information 61, 62 in the two different formats arriving at the inputs 301, 302. However, initially no large format information is contained in the store 26, so text extraction and intelligence are used to create large format information. The information in the resulting output 82 cannot exceed the information 61, 62 received by the two inputs 301, 302. Knowing which presentation style to adopt will help 'create' large screen format. As an example, the Third Presentation style calls for summarised text and summarised audio. When initiating on a small screen 202, summarising is not required and so none should occur. The output (large screen) 82 should be an amalgam of the audio 71 and small screen text 72. The presentation style is held in the configuration file 5.

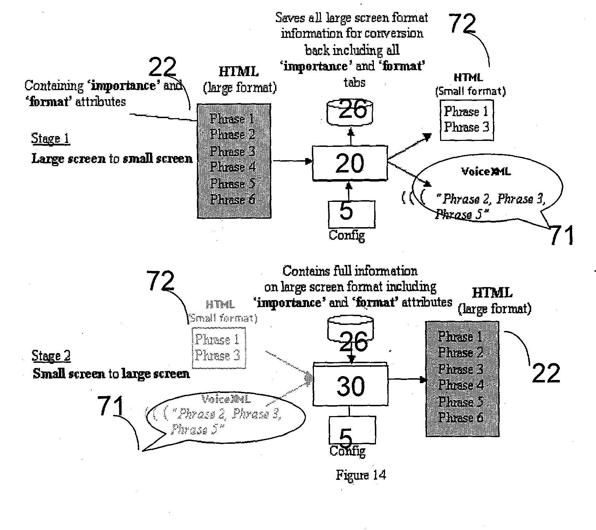

In the fourth presentation style, illustrated in Figure 7, audio and visual content (71, 72) is generated from 'format' and 'importance' attributes of mark-up tags in the preformatted large-format HTML, by parsing these tags and the content within them, as shown in Figure 14. These are compared with an importance threshold which provides the information required for audio content creation. The amount of original text within the large screen HTML 22 which passes through to the audio component 71 will depend of the threshold and the importance tags applied. If the format="audio" or format="both" and the importance="x" is greater than the importance factor in the configuration file 5 then the text related to the tag is selected for audio content (VoiceXML) 71.

Visual content 72 is generated in the same way as audio, using the 'format' and 'importance' attributes of the mark-up tags in the preformatted large-format HTML, by parsing these tags and the content within them. These are compared with an importance threshold which provides the information required for visual content creation. The amount of original text within the large screen HTML which passes through to the audio component will depend of the threshold and the importance tags applied. If the format ="visual" or format="both" and the importance="x" is greater than the importance factor in the configuration (file) then the text related to the tag is selected for small-screen visual content (VoiceXML).

In this example, "importance" and "format" factors have been set in the configuration file to cause the parser to only render audio content having importance levels of 4 or greater, and text content having level 3 or greater, for transition to the new format. Thus the audio output would consist of only the third sentence, and the text content would be the second and third sentences.

The reverse process in the lower half of Figure 14 operates in an analagous way to that disclosed for the embodiment of Figure 12. Conversion from small screen 72 is just a case of looking up the saved version of the large screen format 22 in storage 26, but using the 'importance' and 'format' attributes could also be used to reconstitute the large screen HTML 22 accurately.

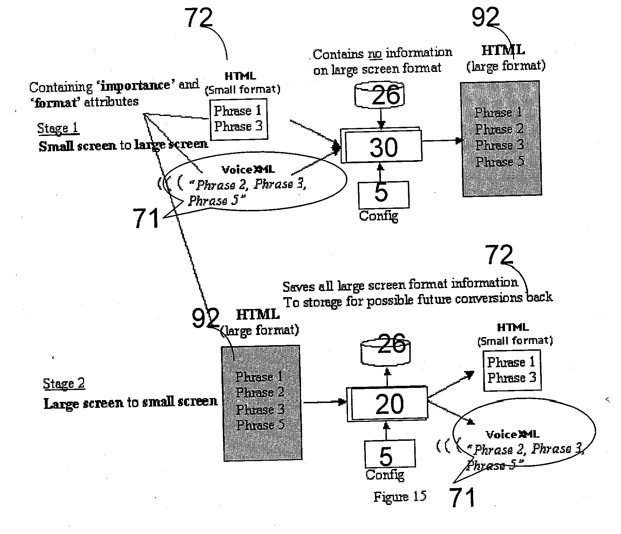

Figure 15 operates in analagous way, initiating on a small screen 202 and audio 201 onto a large screen 22, and then subsequently from large screen back to small screen/audio format. As with the previous embodiment, the full output 92 cannot exceed the information 71, 72 contained in the inputs 301, 302. In the aggregation process text extraction and intelligence are used to create the large format 22 because no large format information is contained in storage 26 at this stage. The 'importance' and 'format' attributes contained in small screen HTML 71 and VoiceXML 72 are useful here. The large format output 92 is just a non-repetitive blend of the two formats. However, if the html attributes remain so that they are available in large format 92, they can be used to reconstitute the and VoiceXML 71 and small screen HTML 72 accurately.

The resultant combination generated using any of the split presentation styles described above would suit a small screen 202, and with the correct controls could allow the user to fast-forward, play or reverse the audio output 201 via 'barge-in' prompts. The controls may be executed using voice commands. For example, a voice command "Fast Forward" or "Next" may be used to cause the audio 51, 61, 71 to skip to the next paragraph, or next tagged section of audio. A "Repeat" command may be used to allow the user to listen to the most recent passage again. The repeated lines could be based on time, or on tagged audio. "End" and Beginning", commands (and other flagged points in the audio file) may be used to cursor the audio. Whatever method of voice control is used, the audio file 51, 61, 71 could be very large in comparison with the small screen text 51, 62, 72 and still remain manageable.

## Claims

1. A process for converting a stream of data into two or more streams of complementary data by identifying metadata associated with the data, and selecting elements of the data for inclusion in each stream according to the metadata so identified.

2. A process according to claim 1, in which the metadata to be identified is information embodied in the data indicative of the significance of the information conveyed.

3. A process according to claim 1 or claim 2, in which two or more complementary, synchronisable components are generated from a single initial data stream.

4. A process according to claim 3, wherein the components are a visual component and an audio component, both derived from initial visual content.

5. A process according to claim 4, wherein some or all of the initial textual content is converted to speech.

6. A process according to claim 4 or claim 5, wherein the audio content and visual content are transmitted to different network destinations.

7. A process according to claim 4, 5 or 6, wherein page progression controls are included in one stream, based on the content of the other.

8. A process according to claim 4, 5 or 6, wherein page progression controls are included in one or more streams, to be triggered by user commands

9. A process according to any preceding claim, in which the selection of data to be displayed by each device is made according to the type of device.

10. A process according to any preceding claim, including a summarising or abridging process to reduce the amount of content to be transmitted.

11. A process according to any preceding claim, wherein the content of each stream is selected in response to a request to a content controller to select one or more destination devices to which to transmit the streamed data.

12. A process according to any preceding claim, wherein the original data stream is stored for subsequent regeneration.

13. Apparatus for converting a stream of data into two or more streams of complementary data by identifying metadata associated with the data, and selecting elements of the data for inclusion in each stream according to the metadata so identified.

14. Apparatus according to claim 12, comprised in a user device configured to receive data in a predetermined format.

15. Apparatus according to claim 12, comprised in a network-based system configured to transmit data to network destinations and comprising means for identifying the network destination for each data stream and generating data streams configured for each destination selected.
